# EUROPÄISCHE PATENTSCHRIFT

(11) **EP 0 898 539 B1**
(45) Veröffentlichungstag und Bekanntmachung des Hinweises auf die Patenterteilung: **24.11.1999**
(21) Anmeldenummer: 97914209.8
(22) Anmeldetag: 10.03.1997
(51) Int. Cl.: B62D 5/06, B62D 5/30

(54) **FAHRZEUGLENKUNG**
VEHICLE STEERING MECHANISM
MECANISME DE DIRECTION DE VEHICULE

(30) Priorität: 19.04.1996 DE 19615544
(43) Veröffentlichungstag der Anmeldung: 03.03.1999
(73) Patentinhaber: DaimlerChrysler AG, 70567 Stuttgart (DE)
(72) Erfinder: BOHNER, Hubert, D-71032 Böblingen (DE); MOSER, Martin, D-70736 Fellbach (DE)
(74) Vertreter: Patentanwalts-Partnerschaft Rotermund + Pfusch
(86) Internationale Anmeldenummer: EP9701195
(87) Internationale Veröffentlichungsnummer: WO9739935

(56) Entgegenhaltungen:
- EP-A- 0 307 612
- DE-A- 4 207 719

## Beschreibung

Die Erfindung betrifft eine Fahrzeuglenkung mit vom Fahrer betätigter Lenkhandhabe, insbesondere Lenkhandrad, sowie den Fahrzeuglenkrädern zugeordnetem motorischen Stellaggregat, mit dem die Lenkhandhabe über eine Regelstrecke wirkverbunden ist, deren Regler für einen Soll-Istwert-Vergleich eingangsseitig an einen von der Lenkhandhabe betätigten Sollwertgeber sowie an einen den Lenkwinkel der Fahrzeuglenkräder registrierenden Istwertgeber angeschlossen ist.

Derzelt sind Personenkraftwagen und ähnliche Kraftfahrzeuge in der Regel mit hydraulischen Servolenkungen ausgestattet, bei denen das Lenkhandrad mechanisch mit den Fahrzeuglenkrädern zwangsgekoppelt ist, d.h. es liegt ein mechanischer Durchtrieb zwischen Lenkhandrad und Fahrzeuglenkrädern vor. Dabei sind die Fahrzeuglenkräder des weiteren mit einem motorischen Stellaggregat antriebsmäßig verbunden, welches in Abhängigkeit von dem zwischen Lenkhandrad und Fahrzeuglenkrädern übertragenen Kräften bzw. Momenten gesteuert wird. Hierzu sind Teile, z.B. Wellenteile, der mechanischen Antriebsverbindung zwischen Lenkhandrad und Fahrzeuglenkrädern miteinander federnd verbunden, so daß die genannten Teile bzw. Wellenteile entsprechend den jeweils wirksamen Kräften oder Momenten einen mehr oder weniger großen Stellhub bzw. eine mehr oder weniger große Drehung relativ zueinander ausführen. Durch diesen Stellhub oder diese Relativdrehung wird dann ein das hydraulische Stellaggregat steuerndes Servoventil betätigt.

Gegebenenfalls kann durch diesen Stellhub bzw. die Relativdrehung auch ein elektrisches Stellaggregat gesteuert werden.

Bei Flugzeugen ist es bekannt, Leitwerke und Flügelklappen u.dgl. mit zugeordneten Handhaben lediglich wirkungsmäßig über eine Regelstrecke zu verbinden, wobei die Handhabe einen Sollwertgeber und die Flügelklappen bzw. Leitwerke einen Istwertgeber betätigen und der Regler der Regelstrecke die Signale von Sollwert- und Istwertgeber im Sinne eines Soll-Istwert-Vergleiches verarbeitet und in Abhängigkeit vom Ergebnis dieses Vergleiches motorische Stellaggregate für die Leitwerke bzw. Flügelklappen steuert. Dieses auch als 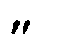 Fly by wire" genannte Konzept ist inzwischen derart zuverlässig, daß sogar Passagierflugzeuge entsprechend ausgerüstet werden.

Grundsätzlich ist es auch möglich, vergleichbare Anordnungen bei Fahrzeuglenkungen vorzusehen, wie die EP 05 39 823 A1 zeigt. Dort wird allerdings auf einen mechanischen Durchtrieb zwischen Lenkhandhabe und Fahrzeuglenkrädern nicht völlig verzichtet. Vielmehr ist lediglich vorgesehen, den mechanischen Durchtrieb bei fehlerfrei arbeitender Regelstrecke unwirksam zu schalten. Damit besteht die Möglichkeit bei Normalbetrieb eine vom mechanischen Durchtrieb abweichende parameterabhängige Lenkcharakteristik zu verwirklichen.

Aufgabe der Erfindung ist es nun, eine vorteilhafte Anordnung für eine Lenkung der eingangs angegebenen Art aufzuzeigen.

Diese Aufgabe wird erfindungsgemäß dadurch gelöst, daß ein hydraulisches Stellaggregat und zu dessen Betätigung zwei separate Hydraulikkreise mit jeweils eigenem, vom entsprechenden Aggregat des anderen Hydraulikkreises konstruktiv abweichendem Steuerventilaggregat vorgesehen sind, und daß eine Sicherheitsventilanordnung zwischen einem durch selbsthemmungsfreie motorische Stellantriebe einschaltbaren Normalzustand, in welchem der eine Hydraulikkreis wirksam ist, sowie einem durch ständig vorliegende Rückstellkraft bei ausgeschalteten Stellantrieben einschaltbaren Notzustand umschaltbar ist, in welchem der andere Hydraulikkreis wirksam wird.

Die Erfindung beruht auf dem allgemeinen Gedanken, bei Verzicht auf einen mechanischen Durchtrieb zwischen Lenkhandhabe und Fahrzeuglenkrädern und lediglich wirkungsmäßiger Verbindung von Lenkhandhabe und Fahrzeuglenkrädern über eine Regelstrecke für die Lenkbetätigung der Fahrzeuglenkräder hydraulische Systeme einzusetzen, deren wesentliche Systemteile auch in herkömmlichen Servolenkungen eingesetzt worden sind und sich dort durch hohe Zuverlässigkeit ausgezeichnet haben.

Darüber hinaus wird eine - unsymmetrische - Redundanz gewährleistet, indem doppelt angeordnete Hydraulikkreise mit voneinander unabhängigen, unterschiedlichen Steuerventilanordnungen vorgesehen sind.

Zweckmäßigerweise besitzen die Steuerventilaggregate vom Regler ausgangsseitig gesteuerte elektromagnetische Stellantriebe, deren elektrische Stromversorgung im Normalfall durch eine Hauptbatterie des Fahrzeuges erfolgt, welche auch weitere elektrische Stromverbraucher des Fahrzeuges versorgen kann. Zusätzlich kann eine Notbatterie vorgesehen sein, um gegebenenfalls über eine zweite elektrische Stromversorgung verfügen zu können.

Wenn dann darüber hinaus doppelt angeordnete Hydraulikpumpen vorgesehen sind, wobei die eine Hydraulikpumpe vom Fahrzeugmotor und die andere Hydraulikpumpe elektrisch antreibbar sein kann, und wenn des weiteren durch eine Vernetzung der Hydraulikkreise miteinander über Absperrventile die Möglichkeit geschaffen wird, gegebenenfalls Systemteile eines Hydraulikkreises auch im anderen Hydraulikkreis einzusetzen, läßt sich insgesamt eine extrem sichere Fahrzeuglenkung ohne Notwendigkeit eines mechanischen Durchtriebes zwischen Lenkhandhabe und Fahrzeuglenkrädern verwirklichen. Damit wird gleichzeitig gegenüber Fahrzeugen mit mechanischer Zwangskopplung zwischen Lenkhandhabe und Fahrzeuglenkrädern der Vorteil geboten, daß bei einem Unfall die Lenkung mit erhöhter Wahrscheinlichkeit funktionsfähig bleibt und die Lenkhandhabe nicht durch Elemente des mechanischen Durchtriebes gegen den Fahrer vorgeschoben werden kann.

Im übrigen wird hinsichlich bevorzugter Merkmale der Erfindung auf die Ansprüche sowie die nachfolgende Erläuterung der Zeichnung verwiesen, anhand der besonders bevorzugte Ausführungsvarianten beschrieben werden.

Dabei zeigt
- Fig. 1: eine schaltplanartige Darstellung einer ersten Ausführungsform, bei der die Hydraulikpumpe des im Normalfall wirksamen Hydraulikkreises in Mittellage des zugeordneten Steuerventilaggregates druckseitig mit einem relativ drucklosen Hydraulikreservoir verbunden ist,
- Fig. 2: eine gegenüber der Ausführungsform der Fig. 1 abgewandelte Variante, bei der das Steuerventilaggregat des im Normalfall wirksamen Hydraulikkreises eine geschlossene Mitte aufweist, und
- Fig. 3: eine Ausführungsform bei der auch das hydraulische Stellaggregat der Fahrzeuglenkräder doppelt vorhanden ist.

In allen Figuren sind die Ventile jeweils in ihren bei Normalbetrieb eingenommenen Stellungen dargestellt.

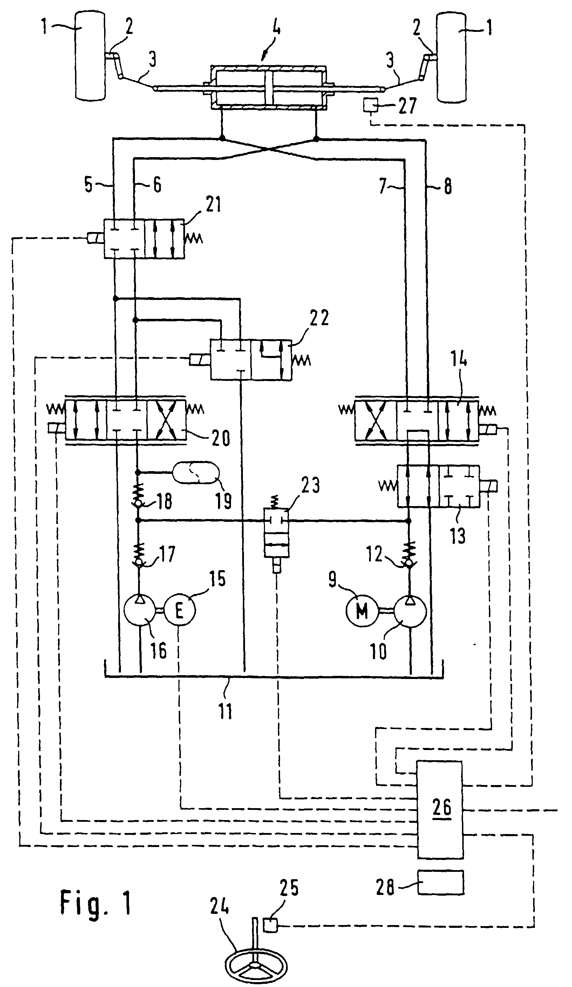

Gemäß Fig. 1 besitzt ein im übrigen nicht näher wiedergegebenes Kraftfahrzeug im dargestellten Beispiel zwei Fahrzeuglenkräder 1, die jeweils an einem cm Fahrzeugaufbau federbar gehalterten und zur Lenkung der Fahrzeuglenkräder 1 um eine Fahrzeughochachse schwenkbaren Radträger 2 angeordnet sind. Die Radträger 2 sind über Spurstangen 3 mit einem hydraulischen Stellaggregat 4 verbunden, welches im dargestellten Beispiel als doppeltwirkendes hydraulisches Kolben-Zylinder-Aggregat ausgebildet ist.

Die beiden vom Kolben des hydraulischen Stellaggregates 4 voneinander abgeteilten Hydraulikkammern des Stellaggregates 4 sind mit Anschlußleitungen 5 und 6 sowie 7 und 8 zweier voneinander gesonderter Hydraulikkreise verbunden.

Ein den Anschlußleitungen 7 und 8 zugeordneter erster Hydraulikkreis besitzt eine vom Fahrzeugmotor 9 angetriebene Hydraulikpumpe 10, welche saugseitig mit einem relativ drucklosen Hydraulikreservoir 11 und druckseitig über ein ständig schließend belastetes Rückschlagventil 12, welches eine Strömung in Richtung der Pumpe 10 verhindert, mit einem Anschluß eines als 4/2-Ventil ausgebildeten Absperrventiles 13 verbunden ist. Dieses Absperrventil 13 besitzt des weiteren einen mit dem Reservoir 11 sowie zwei mit einem Steuerventilaggregat 14 verbundene Anschlüsse. Dieses als Proportionalventil ausgebildete Steuerventilaggregat 14 sperrt in seiner dargestellten Mittellage die mit ihm verbundenen Anschlußleitungen 7 und 8 nach außen ab und verbindet die mit dem Absperrventil 13 kommunizierenden Anschlüsse. Bei Auslenkung aus der Mittellage werden steuerbar gedrosselte Verbindungen zwischen den zum Absperrventil 13 führenden Anschlüssen des Steuerventilaggregates 14 und den Anschlußleitungen 7 und 8 freigegeben.

Der zweite Hydraulikkreis besitzt eine durch Elektromotor 15 antreibbare Hydraulikpumpe 16, die saugseitig wiederum mit dem Hydraulikreservoir 11 verbunden ist und druckseitig über zwei ständig in Schließrichtung belastete Rückschlagventile 17 und 18, welche nur einen von der Pumpe 16 wegführenden Hydraulikstrom zulassen, einerseits mit einem hydraulischen Druckspeicher 19 und andererseits mit einem Anschluß eines als 4/3-Ventil ausgebildeten Steuerventilaggregates 20 kommuniziert. Die weiteren Anschlüsse des Steuerventilaggregates 20 sind einerseits mit dem Reservoir 11 und andererseits über ein Absperrventil 21, welches wiederum als 4/2-Ventil ausgebildet ist, mit den Anschlußleitungen 5 und 6 verbunden.

Über ein Absperrventil 22 können die Verbindungsleitungen zwischen Steuerventilaggregat 20 und Absperrventil 21 voneinander abgesperrt oder miteinander bzw. mit dem Reservoir 11 verbunden werden.

Zwischen den Ausgängen der Rückschlagventile 12 und 17 ist ein Absperrventil 23 vorgesehen.

Ein vom Fahrer betätigtes Lenkhandrad 24 ist mit einem Sollwertgeber 25 für den gewünschten Lenkwinkel der Fahrzeuglenkräder 1 antriebsverbunden. Dieser Sollwertgeber 25 ist an einen Eingang eines Rechners 26 angeschlossen, der über einen weiteren Eingang mit einem Istwertgeber 27 verbunden ist, der den tatsächlichen Lenkwinkel der Fahrzeuglenkräder 1 erfaßt. Im übrigen kann der Rechner 26 eingangsseitig mit weiteren Sensoren bzw. Signalgebern für zusätzliche Parameter verbunden sein.

Ausgangsseitig steuert der Rechner 26 die Stellmagnete der Ventile 13,14 und 20 bis 23 sowie den Elektromotor 15, wobei dem Rechner 26 sowie den von ihm gesteuerten Stellmagneten und dem Elektromotor 15 eine von einer Hauptbatterie des Fahrzeuges gesonderte Zusatzbatterie 28 zugeordnet sein kann, um im Notfall eine elektrische Stromversorgung auch dann sicherstellen zu können, wenn die Hauptbatterie ausfallen oder innerhalb des von der Hauptbatterie gespeisten Stromnetzes ein Fehler auftreten sollte.

Die dargestellte Anordnung arbeitet wie folgt:

Im Normalfall haben die Ventile 13 und 20 bis 23 die dargestellten Positionen. Aufgrund eines vom Rechner 26 zwischen den Signalen des Sollwertgebers 25 und den Signalen des Istwertgebers 27 durchgeführten Soll-Istwert-Vergleiches steuert der Rechner 26 das Proportionalventil 14, d.h. bei verschwindender Soll-Istwert-Abweichung nimmt das Proportionalventil 14 die dargestellte Mittellage ein, in der der Kolben des Stellaggregates 4 praktisch blockiert ist und die Lenkräder 1 den eingestellten Lenkwinkel unverändert beibehalten. Die vom Fahrzeugmotor 9 angetriebene Pumpe 10 fördert in diesem Zustand des Proportionalventiles 14 lediglich im Umlauf, da die Druckseite der Pumpe 10 über das Proportionalventil 14 mit dem Reservoir 11 verbunden ist, an das auch die Saugseite der Pumpe 10 angeschlossen ist. Sobald eine Soll-Istwert-Abweichung beim Lenkwinkel auftritt, wird das Proportionalventil 14 aus der dargestellten Mittellage mehr oder weniger weit in die eine oder andere Richtung verstellt, mit der Folge, daß nunmehr zwischen den Anschlußleitungen 7 und 8 und damit zwischen den beiden Seiten des Kolbens des Stellaggregates 4 eine mehr oder weniger große hydraulische Druckdifferenz in der einen oder anderen Richtung auftritt und zu einer mehr oder weniger schnellen Verstellung des Stellaggregates 4 und damit zu einer Veränderung des Lenkwinkels der Fahrzeuglenkräder 1 führt.

Sollte das Proportionalventil 14 eine Störung aufweisen, kann das Stellaggregat 4 ohne weiteres über das Steuerventil 20 betätigt werden. Hierzu wird das Absperrventil 21 geöffnet. Sobald nun das Steuerventil 20 aus der dargestellten vollständig geschlossenen Mittellage vom Rechner 26 aufgrund einer Soll-Istwert-Abweichung des Lenkwinkels in die eine oder andere Richtung verstellt wird, wird das Stellaggregat auf einer Seite seines Kolbens mehr oder weniger stark vom Druck des Speichers 19 beaufschlagt, der auch beim Normalbetrieb ständig geladen gehalten wird und bei dem nun folgenden Betrieb je nach Stellung des Absperrventiles 23 durch die Pumpe 16 und/oder die Pumpe 10 nachgeladen wird. Um das Nachladen über die Pumpe 10 zu ermöglichen, wird das Absperrventil 13 gegebenenfalls geschlossen, so daß die Druckseite der Pumpe 10 trotz der offenen Mitte des Proportionalventiles 14 keine Verbindung mit dem Reservoir 11 hat.

Die Steuerventile 14 und 20 sind vorzugsweise konstruktiv unterschiedlich ausgebildet, indem beispielsweise das Proportionalventil 14 als Schieberventil und das Steuerventil 20 als sitzgesteuertes Ventil ausgebildet sind. Falls beide Ventile als Schieberventile ausgebildet sind, sollten sie unterschiedliches Spiel zwischen Schieber und Gehäuse aufweisen, um bei eventuellen Verschmutzungen des Hydraulikmediums ein gleichzeitiges Blockieren beider Ventile 14 und 20 zu vermeiden.

Durch Öffnen der Absperrventile 21 und 22 kann gegebenenfalls das Stellaggregat 4 in jedem Betriebszustand drucklos und damit auf Freilauf geschaltet werden. Damit besteht die Möglichkeit, die Lenkräder 1 gegebenenfalls über ein weiteres System (nicht dargestellt) zu steuern, beispielsweise über einen am rechten und linken Fahrzeuglenkrad 1 unterschiedlichen Bremseingriff.

Abweichend von der dargestellten Ausführungsform kann gegebenenfalls zwischen dem Proportionalventil 14 und dem Stellaggregat 4 ein weiteres Absperrventil, ähnlich dem Absperrventil 21, vorgesehen sein, wobei dieses Absperrventil normalerweise seine Offenstellung einnimmt. Dieses weitere Absperrventil kann gegebenenfalls bei blockierendem Steuerventil 14 geschlossen werden, um unabhängig von der Blockierstellung des Ventiles 14 einen Abfluß von Hydraulikmedium über das Ventil 14 vom Stellaggregat 4 zum Reservoir 11 zu verhindern.

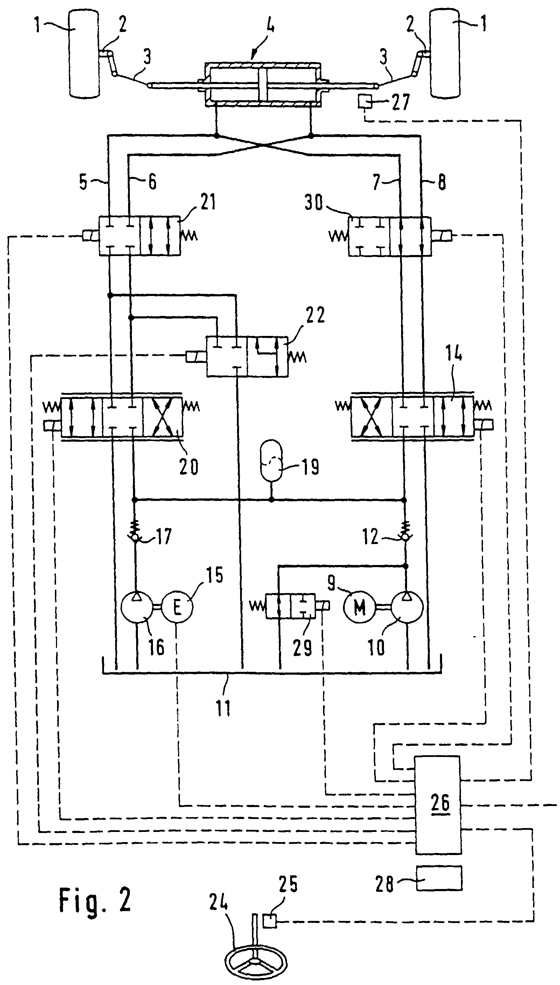

Die Ausführungsform der Fig. 2 unterscheidet sich von der Ausführungsform nach Fig. 1 zunächst vor allem dadurch, daß das Proportionalventil 14 eine vollständig geschlossene Mitte aufweist, die keinerlei Abfluß von Hydraulikmedium von der Druckseite der Pumpe 10 zum Reservoir 11 ermöglicht. Da die Pumpe 10 vom Fahrzeugmotor 9 ständig angetrieben wird und damit ständig Hydraulikmedium fördert, ist druckseitig der Pumpe 10 ein Umlaufventil 29 vorgesehen, welches in Mittelstellung des Proportionalventiles 14 geöffnet wird, wenn der im Beispiel der Fig. 2 ständig auch über die Pumpe 10 nachladbare hydraulische Druckspeicher 19 hinreichend geladen ist.

Im übrigen ist in Fig. 2 zwischen dem Proportionalventil 14 und dem Stellaggregat 4 das vorangehend bei der Erläuterung der Fig. 1 lediglich erwähnte weitere Absperrventil 30 dargestellt. Dieses Ventil 30 wird bei Störungen des Ventiles 14 geschlossen, wenn die Betätigung des Stellaggregates 4 nach Öffnen des Ventiles 21 über das Steuerventil 20 erfolgen soll.

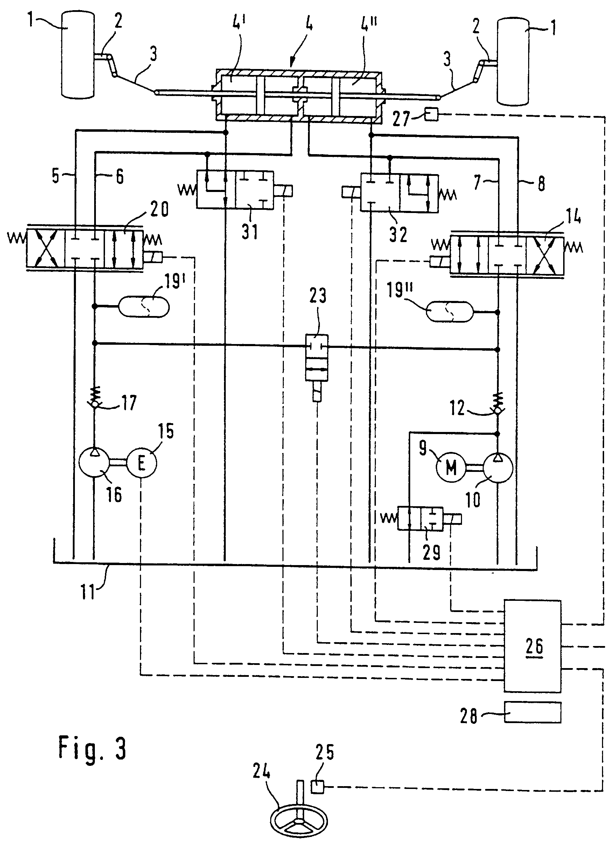

In Fig. 3 ist ein System dargestellt, bei dem das Stellaggregat 4 zwei miteinander zwangsgekoppelte Kolben-Zylinder-Organe 4' und 4'' in Parallelanordnung aufweist, welche jeweils unabhängig von den Stellungen der Proportional- bzw. Steuerventile 14 und 20 durch Absperrventile 31 und 32 auf Freilauf, d.h. auf Verbindung ihrer Kolbenarbeitsräume miteinander sowie mit dem Reservoir 11 geschaltet werden können. Im Normalfall wird das Absperrventil 31 offen und das Absperrventil 32 geschlossen gehalten, so daß nur das Kolben-Zylinder-Aggregat 4'' wirksam werden kann.

Die Steuer- bzw. Proportionalventile 14 und 20 sind beide mit vollständig geschlossener Mitte ausgebildet.

Jeder der Pumpen 10 und 16 ist druckseitig ein eigener hydraulischer Druckspeicher 19' bzw. 19'' zugeordnet.

Während die Pumpe 16 wie in den Ausführungsformen der Fig. 1 und 2 durch einen steuerbaren und gegebenenfalls stillsetzbaren Elektromotor 15 angetrieben wird und dementsprechend immer bedarfsgerecht arbeiten kann, wird die Pumpe 10 wiederum vom Fahrzeugmotor 9 - unabhängig vom jeweiligen Förderbedarf - angetrieben, wobei dann durch Steuerung des Umschaltventiles 29 der tatsächliche Förderstrom zum Speicher 19'' bzw. zum Proportionalventil 14 gesteuert wird.

Die vorzugsweise zwischen den Speichern 19' und 19'' vorgesehene Verbindungsleitung mit dem Absperrventil 23 bietet die Möglichkeit, jeden der Speicher 19' und 19'' durch jede der Pumpen 10 bzw. 15 laden zu können.

Bei Störungen im bzw. am Hydraulikkreis auf der Seite des Kolben-Zylinder-Aggregates 4'' wird das Absperrventil 32 bei gleichzeitiger Schließung des Absperrventiles 31 geöffnet, so daß nunmehr das Kolben-Zylinder-Aggregat 4' wirksam über Steuerung des Steuerventiles 20 betätigt werden kann.

Bei allen dargestellten Ausführungsformen können aie Pumpen 10 und 16 gegebenenfalls auch im Tandembetrieb arbeiten, da beide Pumpen 10 und 16 jeweils mit jedem der Ventile 14 und 20 verbindbar bzw. verbunden sind.

Im übrigen kann jeweils die Pumpe 10 bzw. 16 des einen Hydraulikkreises in den jeweils anderen Hydraulikkreis eingeschaltet werden.

Bei allen Ausführungsformen können die Ventile zumindest teilweise derart ausgebildet sein, daß sie in ihre für Notlagen vorgesehene Stellungen durch Stellfedern gedrängt werden und dementsprechend die zur Verstellung der Ventile gegen die Stellfedern vorgesehenen selbsthemmungsfreien Stellmagnete lediglich von der elektrischen Stromzufuhr abgeschaltet werden müssen.

## Patentansprüche

1. Fahrzeuglenkung mit vom Fahrer betätigter Lenkhandhabe, insbesondere Lenkhandrad, sowie den Fahrzeuglenkrädern zugeordnetem motorischen Stellaggregat, mit dem die Lenkhandhabe über eine Regelstrecke wirkverbunden ist, deren Regler für einen Soll-Istwert-Vergleich eingangsseitig an einen von der Lenkhandhabe betätigten Sollwertgeber sowie an einen den Lenkwinkel der Fahrzeuglenkräder registrierenden Istwertgeber angeschlossen ist,
**dadurch gekennzeichnet,**
daß ein hydraulisches Stellaggregat (4) und zu dessen Betätigung zwei separate Hydraulikkreise mit jeweils eigenem, vorzugsweise vom entsprechenden Aggregat des anderen Hydraulikkreises konstruktiv abweichendem Steuerventilaggregat (14,20) vorgesehen sind, und daß eine Sicherheitsventilanordnung (13,21,22,23,30,31,32) zwischen einem Normalzustand, in welchem der eine Hydraulikkreis wirksam ist, sowie einem Notzustand umschaltbar ist, in welchem der andere Hydraulikkreis wirksam wird.

2. Fahrzeuglenkung nach Anspruch 1,
**dadurch gekennzeichnet,**
daß ein einziges Stellaggregat (4) mit beiden Hydraulikkreisen verbindbar ist, wobei den Hydraulikkreisen zugeordnete Anschlußleitungen (5 bis 8) durch das dem jeweiligen Hydraulikkreis zugeordnete Steuerventilaggregat (14,20) und/oder durch gesonderte Absperrventile (13,21,30 bis 32) absperrbar sind.

3. Fahrzeuglenkung nach Anspruch 1,
**dadurch gekennzeichnet,**
daß das Stellaggregat (4) zwei zueinander parallele Betätigungsaggregate (4',4'') aufweist, die jeweils einem der Hydraulikkreise zugeordnet sind.

4. Fahrzeuglenkung nach einem der Ansprüche 1 bis 3,
**dadurch gekennzeichnet,**
daß doppelt angeordnete Pumpen (10,15) vorgesehen sind und voneinander unabhängige Antriebe aufweisen.

5. Fahrzeuglenkung nach Anspruch 4,
**dadurch gekennzeichnet,**
daß die eine Pumpe (10) durch den Fahrzeugmotor (9) und die andere Pumpe (16) durch einen steuerbaren Elektromotor (15) antreibbar ist.

6. Fahrzeuglenkung nach einem der Ansprüche 1 bis 5,
**dadurch gekennzeichnet,**
daß die Druckseiten der Pumpen (10,16) miteinander verbunden bzw. verbindbar sind.

7. Fahrzeuglenkung nach einem der Ansprüche 1 bis 6,
**dadurch gekennzeichnet,**
daß die Steuerventilaggregate (14,20) unterschiedliche Konstruktion aufweisen.

8. Fahrzeuglenkung nach einem der Ansprüche 1 bis 7,
**dadurch gekennzeichnet,**
daß zusätzlich zu einem elektrischen Bordnetz des Fahrzeuges eine Notstromversorgung bzw. eine Zusatzbatterie (28) vorgesehen sind.

## Claims

1. A vehicle steering system having a steering grip control, in particular a steering wheel, which is activated by the driver, as well as a motor-operated actuator unit which is assigned to the steered wheels of the vehicle and to which the steering grip control is operatively connected via a controlled system, the controller of which is connected on the input side, for a desired value/actual value comparison, to a desired value transmitter which is activated by the steering grip control and to an actual value transmitter which registers the steering angle of the steered wheels of the vehicle, wherein a hydraulic actuator unit (4) is provided, and to activate it, two separate hydraulic circuits with in each case their own control valve unit (14, 20), which preferably differs structurally from the corresponding unit of the other hydraulic circuit, are provided, and wherein a safety valve arrangement (13, 21, 22, 23, 30, 31, 32) can be switched over between a normal state, in which the one hydraulic circuit is active, and an emergency state, in which the other hydraulic circuit is active.

2. The vehicle steering system as claimed in claim 1, wherein a single actuator unit (4) can be connected to both hydraulic circuits, connecting lines (5 to 8) which are assigned to the hydraulic circuit being capable of being shut off by means of the control valve unit (14, 20) which is assigned to the respective hydraulic circuit and/or by means of separate shut-off valves (13, 21, 30 to 32).

3. The vehicle steering system as claimed in claim 1, wherein the actuator unit (4) has two activation units (4', 4'') which are parallel to one another and which are each assigned to one of the hydraulic circuits.

4. The vehicle steering system as claimed in one of claims 1 to 3, wherein pumps (10, 15) which are arranged in duplicate are provided and have drives which are independent of one another.

5. The vehicle steering system as claimed in claim 4, wherein the one pump (10) can be driven by the vehicle engine (9) and the other pump (16) can be driven by means of a controllable electric motor (15).

6. The vehicle steering system as claimed in one of claims 1 to 5, wherein the delivery sides of the pumps (10, 16) are connected to one another and/or can be connected to one another.

7. The vehicle steering system as claimed in one of claims 1 to 6, wherein the valve control units (14, 20) have a differing design.

8. The vehicle steering system as claimed in one of claims 1 to 7, wherein, in addition to an electrical system of the vehicle, an emergency power supply and/or an additional battery (28) are provided.

## Revendications

1. Système de direction de véhicule comprenant un élément de manoeuvre de direction actionné par le conducteur, notamment un volant de direction, ainsi qu'un vérin de commande moteur associé aux roues directrices du véhicule et auquel est relié fonctionnellement l'élément de manoeuvre de direction, par l'intermédiaire d'un système d'asservissement dont le régulateur, en vue d'une comparaison entre valeur de consigne et valeur réelle, est raccordé, côté entrée, à un capteur de valeur de consigne actionné par l'élément de manoeuvre de direction, ainsi qu'à un capteur de valeur réelle enregistrant l'angle de braquage des roues directrices du véhicule, **caractérisé** en ce que sont prévus, un vérin de commande hydraulique (4) et, pour son actionnement, deux circuits hydrauliques séparés, comprenant chacun son propre ensemble de soupape de commande (14, 20) de préférence d'une construction différente de l'ensemble respectif de l'autre circuit hydraulique, et en ce qu'un agencement de soupape de sécurité (13, 21, 22, 23, 30, 31, 32) peut être commuté entre un état normal, dans lequel l'un des circuits hydrauliques est actif, et un état d'urgence, dans lequel c'est l'autre circuit hydraulique qui est actif.

2. Système de direction de véhicule selon la revendication 1, **caractérisé** en ce qu'un seul vérin de commande (4) peut être relié aux deux circuits hydrauliques, et des conduites de raccordement (5 à 8) associées aux circuits hydrauliques peuvent être fermées par l'ensemble de soupape de commande (14, 20) associé au circuit hydraulique respectif, et/ou par des soupapes d'arrêt (13, 21, 30 à 32) distinctes.

3. Système de direction de véhicule selon la revendication 1, **caractérisé** en ce que le vérin de commande (4) comprend deux vérins d'actionnement (4', 4'') en parallèle, qui sont associés chacun respectivement à l'un des circuits hydrauliques.

4. Système de direction de véhicule selon l'une des revendications 1 à 3, **caractérisé** en ce que sont prévues des pompes (10, 15) en agencement double, qui présentent des systèmes d'entraînement indépendants.

5. Système de direction de véhicule selon la revendication 4, **caractérisé** en ce que l'une (10) des pompes peut être entraînée par le moteur de véhicule (9), et l'autre pompe (16) par un moteur électrique (15) pouvant être commandé.

6. Système de direction de véhicule selon l'une des revendications 1 à 5, **caractérisé** en ce que les côtés refoulement des pompes (10, 16) sont reliés ou peuvent être reliés l'un à l'autre.

7. Système de direction de véhicule selon l'une des revendications 1 à 6, **caractérisé** en ce que les ensembles de soupape de commande (14, 20) sont de construction différente.

8. Système de direction de véhicule selon l'une des revendications 1 à 7, **caractérisé** en ce qu'en supplément à un réseau électrique de bord du véhicule, sont prévus une alimentation de courant de secours et/ou une batterie additionnelle (28).
